# EUROPEAN PATENT APPLICATION

(11) **EP 4 579 012 A1**
(43) Date of publication of application: **02.07.2025**
(21) Application number: 23857248.1
(22) Date of filing: 14.08.2023
(51) Int. Cl.: D02G 3/04, B60C 9/00, D02G 3/28, D02G 3/48

(54) **HYBRID CORD, RUBBER-FIBER COMPOSITE, AND TIRE**

(30) Priority: 25.08.2022 JP 2022134409
(71) Applicant: BRIDGESTONE CORPORATION, Chuo-ku Tokyo 104-8340 (JP)
(72) Inventor: FUJIE Masahiro, Tokyo 104-8340 (JP)
(74) Representative: Marks & Clerk LLP
(86) International application number: PCT/JP2023/029457
(87) International publication number: WO 2024/043135

(57) **Abstract**

The present disclosure is directed to providing a cord that can reduce environmental load while maintaining physical properties at high temperatures. The solution is a hybrid cord including a polyamide 4,10 fiber and a fiber A with a break elongation of 7% or less.

## Description

### TECHNICAL FIELD

The present disclosure relates to a hybrid cord, a rubber-fiber composite, and a tire.

### BACKGROUND

Conventionally, a carcass including a reinforcing cord is disposed inside a tire to enhance the strength and rigidity of the tire, and a belt including a reinforcing cord is disposed on the outside in the tire radial direction of the carcass. Additionally, a belt reinforcing layer (also referred to as a "cap layer") including a reinforcing cord may be disposed on the outside in the tire radial direction of the belt to reinforce the belt. Among these tire members, organic fiber cords, such as polyamide (nylon) fiber cords and polyester fiber cords, are typically used as the reinforcing cords for the carcass and belt reinforcing layers.

On the other hand, in recent years, there has been a demand to reduce the use of fossil resources such as petroleum and coal to lower environmental load. Accordingly, studies have been conducted to replace these organic fiber cords derived from fossil resources with cords derived from biomass (derived biological resources). In such replacements, it is essential to maintain the tire characteristics at sufficient levels. For example, PTL 1 discloses a reinforcing ply (rubber-fiber composite) containing a reinforcing element that includes multifilament yarns made of polyamide based on a renewable raw material, specifically nylon 4,10, as well as a pneumatic vehicle tire including the reinforcing ply.

### CITATION LIST

### Patent Literature

PTL 1: WO 2017/157498 A1

### SUMMARY

### (Technical Problem)

Among polyamide fiber cords used for tires, polyamide 6,6 (PA66) fiber cords are widely used. However, it is challenging to synthesize polyamide 6,6 (PA66) serving as the raw material of the cords from biomass.

To address this issue, the present inventor has conducted research on polyamide fiber cords using polyamide (nylon) 4,10 disclosed in PTL 1 described above as a substitute for polyamide 6,6. However, these polyamide fiber cords exhibit low physical properties (particularly elastic modulus and tenacity) at high temperatures. When such polyamide fiber cords are applied to tires, the tire characteristics are reduced.

Additionally, organic fiber cords are also used in other rubber products such as conveyor belts and hoses, which also require reductions in environmental load.

Accordingly, the present disclosure is directed to providing a cord that can reduce environmental load while maintaining physical properties at high temperatures, as well as a rubber-fiber composite including such a cord.

Furthermore, the present disclosure is further directed to providing a tire that includes such a cord, and can reduce environmental load while maintaining the tire characteristics.

### (Solution to Problem)

The main features of a cord (hybrid cord), a rubber-fiber composite, and a tire of the present disclosure for solving the above issue are as follows.
[1] A hybrid cord comprising a polyamide 4,10 fiber and a fiber A with a break elongation of 7% or less.
[2] The hybrid cord according to [1], wherein the fiber A is at least one type selected from the group consisting of an aramid fiber, a carbon fiber, and a glass fiber.
[3] The hybrid cord according to [1] or [2], which is a cord formed from three fibers twisted together.
[4] The hybrid cord according to any one of [1] to [3], which is a cord formed from two aramid fibers and one polyamide 4,10 fiber twisted together.
[5] A rubber-fiber composite comprising the hybrid cord according to any one of [1] to [4].
[6] A tire comprising the hybrid cord according to any one of [1] to [4].

### (Advantageous Effect)

According to the present disclosure, it is possible to provide a hybrid cord and a rubber-fiber composite that can maintain physical properties at high temperatures while reducing environmental load.

Furthermore, according to the present disclosure, it is possible to provide a tire that can reduce environmental load while maintaining the tire characteristics.

### BRIEF DESCRIPTION OF THE DRAWINGS

In the accompanying drawings:

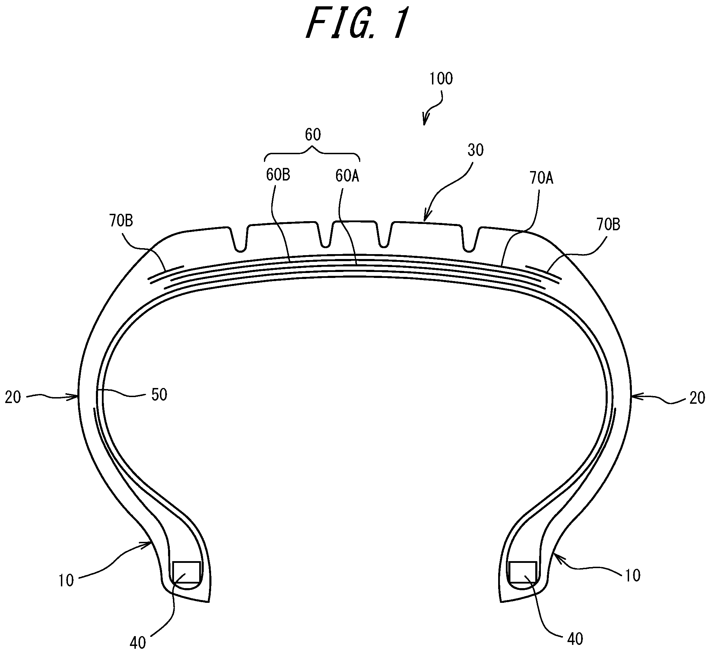

FIG. 1 is a cross-sectional view of one embodiment of a tire according to the present disclosure.

### DETAILED DESCRIPTION

A hybrid cord, a rubber-fiber composite, and a tire according to the present disclosure will be exemplified and described in detail with reference to an embodiment thereof.

### <Definitions>

In the present specification, the term "hybrid cord" refers to a cord including at least two types of fibers and is also referred to as a "composite cord." Here, the expression "including at least two types of fibers" means that two or more fibers made from differing materials are included. In addition, the fibers included in the cord are also referred to as a "fiber bundle" or "filament bundle."

Furthermore, in this specification, the break elongation of the fiber A refers to a value measured by a tensile test at room temperature (23°C) in accordance with JIS L 1013 "Test Methods for Chemical Fiber Filament Yarns."

Additionally, in the present specification, the "amide density" of a polyamide is defined by the following formula (1). Amide density = The number of amide groups in the polyamide / The number of atoms in the main chain of the polyamide × 100

Here, "the number of amide groups in the polyamide" and "the number of atoms in the main chain of the polyamide" are calculated based on "the number of amide groups" and "the number of atoms in the main chain" in one repeating unit of the polyamide.

For example, the amide density of polyamide 6,6 is 14.3, and the amide density of polyamide 4,10 is 12.5.

Additionally, in this specification, the "average amide density" of the hybrid cord is calculated using the following formula (2). Average amide density = [(fineness of fiber A (dtex) × the number of fibers A × amide density of fiber A) + (fineness of fiber B (dtex) × the number of fibers B × amide density of fiber B) + ...] / (fineness of fiber A (dtex) × the number of fibers A + fineness of fiber B (dtex) × the number of fibers B + ...)

Here, the fiber A represents the first type of fiber, and the fiber B represents the second type of fiber. When the hybrid cord contains three or more types of fibers, the "..." portion of the numerator is supplemented with the "fineness of the fiber in question (dtex) × the number of that fiber × amide density of that fiber," and the "..." portion of the denominator is supplemented with the "fineness of the fiber in question (dtex) × the number of that fiber."

As one example, in the case of a cord formed by twisting together two fibers A with a fineness of 1100 dtex and an amide density of 10.3 and one fiber B with a fineness of 940 dtex and an amide density of 12.5, the average amide density is calculated as follows: Average amide density = [(1100 × 2 × 10.3) + (940 × 1 × 12.5)] / (1100 × 2 + 940) = 10.96.

Stated differently, when the cord includes n types of fibers and the n^{th} type of fiber is denoted as ''fiberₙ'', the average amide density can be calculated from the following formula (2'). Average amide density = Σ (fineness of fibern × the number of fibern × amide density of fibern) / Σ (fineness of fibern × the number of fibern)

Additionally, in this specification, the term "bio-based ratio" refers to the proportion of carbon derived from biomass and is calculated using the following formula (3). Bio-based ratio (%) = The number of carbon atoms derived from biomass / Total number of carbon atoms × 100

In this specification, the term "derived from biomass" means that the material in question is derived from a biological resource such as plant resources, animal resources, and microbial resources, and is synonymous with "bio-derived."

As will be described later, the hybrid cord of the present embodiment includes a polyamide 4,10 fiber that can be synthesized from biological resources (biomass), such as plant resources, but the polyamide 4,10 fiber may also contain a component not derived from biomass in addition to the component derived from biomass. Furthermore, with regard to those other than the polyamide 4, 10 fiber containing a component derived from biomass, compounds described in this specification may partially or entirely be derived from fossil resources, biological resources such as plant resources (biomass-derived), or recycled resources such as used tires. Alternatively, they may be derived from a mixture of two or more of fossil resources, biological resources, and recycled resources.

### <Hybrid Cord>

A hybrid cord of the present embodiment includes a polyamide 4,10 fiber and a fiber A with a break elongation of 7% or less. It should be noted that the hybrid cord of the present embodiment includes a polyamide 4,10 fiber and a fiber A with a break elongation of 7% or less, but it may also include other fibers (fiber bundles).

Since the hybrid cord of the present embodiment includes a polyamide 4,10 fiber and polyamide 4,10 (PA410) serving as the raw material for the polyamide 4,10 fiber can be synthesized from biological resources (biomass), such as plant-based resources, the environmental load can be reduced.

In addition, since the hybrid cord of the present embodiment includes the fiber A with a break elongation of 7% or less, sufficient strength can be ensured and physical properties, such as elastic modulus and tenacity, can be maintained even at high temperatures. Furthermore, since the hybrid cord of the present embodiment contains the fiber A with a break elongation of 7% or less, it can achieve physical properties equivalent to cords made using petroleum-derived polyamide 6,6 (PA66) fibers.

Therefore, the hybrid cord of the present embodiment can reduce the environmental load while maintaining physical properties, particularly elastic modulus and tenacity, at high temperatures.

The hybrid cord of the present embodiment includes a polyamide 4,10 fiber. Polyamide 4,10 (PA410) is obtained through a condensation polymerization reaction of tetramethylenediamine (with four carbon atoms) and sebacic acid (with ten carbon atoms). Tetramethylenediamine is derived from plant resources such as sugarcane, and sebacic acid is derived from plant resources such as castor beans.

For example, tetramethylenediamine is also called "putrescine," and can be obtained by fermenting sugarcane to produce glutamic acid, biochemically converting the glutamic acid into ornithine, and then decarboxylating the resulting ornithine.

Additionally, sebacic acid can be obtained by mechanically pressing castor beans to extract castor oil, performing methanolysis on the castor oil to produce methyl ricinoleate, and then saponifying the methyl ricinoleate.

As described above, the polyamide 4,10 (PA410) fiber can be synthesized from biological resources (biomass), such as plant-based resources. Furthermore, fibers that are fully derived from biomass (i.e., fibers with a bio-based ratio of 100%) can be used as the polyamide 4,10 fiber, offering a significant effect of reducing environmental load. From the perspective of reducing environmental load, the polyamide 4,10 fiber is preferably derived fully from biomass (in other words, the bio-based ratio thereof is 100%). Moreover, polyamide 4,10 fiber has physical properties similar to polyamide 6,6 fiber, aside from thermal properties, and hybrid cords containing polyamide 4,10 fiber exhibit sufficient performances as tire cords.

The hybrid cord of the present embodiment includes a fiber A with a break elongation of 7% or less. The fiber A is a fiber other than the polyamide 4,10 fiber described above. Since the fiber A has a break elongation of 7% or less and is rigid, it is excellent in physical properties (particularly elastic modulus and tenacity) at high temperatures. From the above perspective, the break elongation of the fiber A is preferably 5.0% or less.

The fiber A preferably has a break strength of 7.0 cN/dtex or more. Since the fiber A is rigid when the break strength is 7.0 cN/dtex or more, the fiber A is excellent in physical properties (particularly elastic modulus and tenacity) at high temperatures. From the above perspective, the break strength of the fiber A is preferably 12.0 cN/dtex or more.

The fiber A is not particularly limited as long as it has a break elongation at of 7% or less and is a fiber other than the polyamide 4,10 fiber described above. However, the fiber A is preferably at least one type selected from the group consisting of an aramid fiber, a carbon fiber, and a glass fiber, with an aramid fiber being particularly preferred. An aramid fiber, a carbon fiber, and a glass fiber can sufficiently compensate for physical properties (thermal properties) at high temperatures of the polyamide 4,10 fiber because they are rigid and also have excellent thermal properties. In addition, they can further enhance the thermal properties of the hybrid cord.

In the hybrid cord, preferably, the volume ratio of the fiber A with a break elongation of 7% or less is 50% or more, and the volume ratio of the polyamide 4,10 fibers is 50% or less. When the volume ratio of the fiber A with a break elongation of 7% or less is 50% or more, the thermal properties of the hybrid cord are improved.

The hybrid cord of the present embodiment is preferably a cord formed from three fibers twisted together. A cord formed from three fibers twisted together can ensure sufficient rigidity as a reinforcing material for tires compared to a cord formed from two fibers twisted together, and can also achieve weight reduction compared to a cord formed from four fibers twisted together.

The hybrid cord of the present embodiment is particularly preferably a cord formed from two aramid fibers and one polyamide 4,10 fiber twisted together. Such a hybrid cord, owing to the two aramid fibers, is rigid and possesses excellent thermal properties, while the inclusion of polyamide 4,10 fiber, which can achieve a bio-based ratio of 100%, has an effect of significantly reducing the environmental load.

Polyamide 4,10 serving as the raw material for the polyamide 4,10 fiber has an amide density of 12.5, whereas polyamide 6,6 serving as the raw material for polyamide 6,6 fiber has an amide density of 14.3.

Here, as the amide density of organic fibers (polyamide fibers) is increased, denser hydrogen bonds are formed between amide groups. As a result, the melting point (Tm), glass transition temperature (Tg), moisture content, and elastic modulus (E') tend to be increased while the thermal shrinkage rate tends to be decreased. Therefore, organic fibers with higher amide density tend to exhibit superior physical properties (thermal properties) at high temperatures.

While the polyamide 4,10 fiber has inferior physical properties (thermal properties) at high temperatures compared to polyamide 6,6 fibers, the fiber A with a break elongation of 7% or less compensates for physical properties at high temperatures in the hybrid cord of the present embodiment.

The hybrid cord of the present embodiment preferably has an average amide density of 10.5 or more. When the hybrid cord has an average amide density of 10.5 or more, hydrogen bonds between amide groups are densely formed, which ensures sufficient strength and improves thermal properties. As a result, properties, such as elastic modulus and tenacity, are maintained even at high temperatures.

The hybrid cord of the present embodiment includes the polyamide 4,10 fiber and the fiber A with a break elongation of 7% or less. For example, a twisted cord can be obtained by applying a primary twist to each polyamide fiber (raw yarn), then combining the fibers in a plural and applying a secondary twist in the reverse direction. Here, the number of primary twists of the polyamide 4,10 fiber is preferably in the range of 10 to 60 twists/10 cm, the number of primary twists of the fiber A with a break elongation of 7% or less is preferably in the range of 10 to 60 twists/10 cm, and the number of secondary twists is preferably in the range of 10 to 60 twists/10 cm. If the number of primary twists of the polyamide 4,10 fiber is less than 10 twists /10 cm, the twisted yarn cord may not be provided with sufficient fatigue resistance. On the other hand, if it exceeds 60 twists /10 cm, the tenacity of the twisted cord may be decreased. If the number of primary twists of the fiber A with a break elongation of 7% or less is less than 10 twists /10 cm, the twisted yarn cord may not be provided with sufficient fatigue resistance. On the other hand, if it exceeds 60 twists /10 cm, the tenacity of the twisted yarn cord may be reduced. Moreover, if the number of secondary twists is less than 10 twists /10 cm, the twisted yarn cord may not be provided with sufficient fatigue resistance. On the other hand, if it exceeds 60 twists /10 cm, the tenacity of the twisted yarn cord may be reduced.

The total fineness of the hybrid cord of the present embodiment is preferably in the range of 1000 to 6000 dtex. If the total fineness of the hybrid cord is less than 1000 dtex, sufficient strength as a fiber for tires may not be achieved. On the other hand, if it exceeds 6000 dtex, the treat thickness increases, leading to an increase in the weight of the tire.

Additionally, the fineness of the polyamide 4,10 fiber is preferably in the range of 400 to 3000 dtex, and the fineness of the fiber A with a break elongation of 7% or less is preferably in the range of 1000 to 4000 dtex. If the fineness of the polyamide 4,10 fiber is less than 400 dtex, sufficient strength as a fiber for tires may not be achieved. On the other hand, if it exceeds 3000 dtex, the treat thickness increases, leading to an increase in the weight of the tire. If the fineness of the fiber A with a break elongation of 7% or less is less than 1000 dtex, sufficient strength as a fiber for tires may not be achieved. On the other hand, if it exceeds 4000 dtex, the treat thickness increases, leading to an increase in the weight of the tire.

The thermal shrinkage rate of the hybrid cord of the present embodiment is preferably 4.0% or less. Here, the thermal shrinkage rate is a value measured by heating at 177°C for 2 minutes according to ASTM D885 and ASTM D4974. When the thermal shrinkage rate of the hybrid cord is 4.0% or less, physical properties (particularly elastic modulus and tenacity) at high temperatures can be adequately maintained, and excellent uniformity is achieved during high-speed driving.

The breaking strength of the hybrid cord of the present embodiment is preferably 6.0 cN/dtex or more. Additionally, the breaking strength of the hybrid cord is preferably 200 N or more. Here, the breaking strength is measured at room temperature (23°C) according to ASTM D855M. This is because, when the breaking strength of the hybrid cord is 6.0 cN/dtex or more, or 200 N or more, a sufficient reinforcement effect can be achieved.

The break elongation (elongation at break) of the hybrid cord of the present embodiment is preferably 8.0% or more. Here, the break elongation is measured at room temperature (23°C) according to ASTM D855M. If the break elongation of the hybrid cord is less than 8.0%, sufficient reinforcement effect may not be achieved.

The moisture content in the hybrid cord of the present embodiment is preferably 3.0% or less. Here, the moisture content is measured according to JIS L 1013. If the moisture content in the hybrid cord exceeds 3.0%, the physical properties may be decreased and a sufficient reinforcement effect may not be achieved.

As described above, since the hybrid cord of the present embodiment can reduce environmental load while maintaining physical properties at high temperatures, it is particularly suitable as a tire cord that requires excellent physical properties, such as elastic modulus and tenacity, at high temperatures. Additionally, since the hybrid cord of the present embodiment has sufficient physical properties (thermal properties) at high temperatures, it is also suitable for uses other than tires, such as conveyor belts and hoses.

### <Adhesive Composition>

The hybrid cord (organic fiber cord) is preferably treated with an adhesive composition.

The adhesive composition may include, for example, a thermoplastic polymer (A) having at least one pendant group with a crosslinkable functional group and substantially free of carbon-carbon double bonds with addition reactivity in the main chain structure thereof, a thermally reactive-type aqueous urethane resin (B), and an epoxy compound (C), and optionally further include a rubber latex (D). By treating the hybrid cord (organic fiber cord) with such an adhesive composition, the adhesion between the hybrid cord (organic fiber cord) and the elastomer (coating rubber) can be improved at high temperatures.

Conventionally, the adhesive treatment of organic fiber cords involves a so-called two-bath process in which epoxy or isocyanate is applied to the cord surface, followed by treatment with a resin formed by mixing resorcinol, formaldehyde, and latex (hereinafter referred to as RFL resin). However, with this approach, the resin used in the first-stage bath can become extremely hard, increasing the strain input into the organic fiber cord, which can decrease the fatigue resistance of the cord. Additionally, while such an RFL resin can achieve sufficient adhesion between the cord and elastomer at room temperature, the adhesion may be reduced significantly at high temperatures of 130°C or higher. In contrast, using a single-stage bath mixture (adhesive composition) containing a thermoplastic polymer (A) having at least one pendant group with a crosslinkable functional group and substantially free of carbon-carbon double bonds with addition reactivity in the main chain structure thereof, a thermally reactive-type aqueous urethane resin (B), and an epoxy compound (C) can ensure sufficient adhesion with the elastomer (coating rubber) even at high temperatures of 180°C or higher without hardening the hybrid cord (organic fiber cord).

The main chain of the thermoplastic polymer (A) has primarily a linear structure, and the main chain is preferably an ethylene-based addition polymer such as an acrylic polymer, vinyl acetate-based polymer, and vinyl acetate-ethylene-based copolymer; an urethane-based high-molecular polymer; or the like, for example. However, the thermoplastic polymer (A) is not limited to the above-mentioned ethylene-based addition polymer or urethane-based high-molecular polymer, as long as it can inhibit flowability of the resin at high temperatures and ensure the rupture tenacity of the resin through crosslinking of the functional group on the pendant group.

Preferred examples of the functional group on the pendant group of the thermoplastic polymer (A) include oxazoline groups, bismaleimide groups, (blocked) isocyanate groups, aziridine groups, carbodiimide groups, hydrazino groups, epoxy groups, and epithio groups.

The thermoplastic polymer (A), the thermally reactive-type aqueous urethane resin (B), the epoxy compound (C), and the rubber latex (D) described above that can be used may be those disclosed in JP 2023-040157 A or those disclosed in JP 2023-030762 A.

In the adhesive treatment of the hybrid cord (organic fiber cord), a three-component mixture (adhesive composition) of the thermoplastic polymer (A), the thermally reactive-type aqueous urethane resin (B), and the epoxy compound (C) is preferably used as the treatment liquid for the first-stage bath, and a conventional RFL resin liquid is used as the treatment liquid for the second-stage bath. Additionally, in the above adhesive treatment, it is also possible to perform single-stage bath treatment using a mixture (adhesive composition) of the thermoplastic polymer (A), the thermally reactive-type aqueous urethane resin (B), the epoxy compound (C), and the rubber latex (D).

In the above-described adhesive composition, the proportion of the thermoplastic polymer (A) (dry mass ratio) is preferably 2 to 75%, the proportion of the thermally reactive-type aqueous urethane resin (B) (dry mass ratio) is preferably 15 to 87%, the proportion of the epoxy compound (C) (dry mass ratio) is preferably 11 to 70%, and the proportion of the rubber latex (D) (dry mass ratio) is preferably 20% or less.

In the meantime, from a perspective of environmental protection, it is preferable to use a dip treatment solution that does not contain resorcinol and formaldehyde as the adhesive composition for the hybrid cord (organic fiber cord). An example of such a dip treatment solution is, for example, a composition containing a rubber latex (a) with an unsaturated diene and one or more compounds (b) selected from compounds containing a skeletal structure made of polyether and an amine functional group, compounds with an acrylamide structure, polypeptides, polylysine, and carbodiimides. Additionally, an example of such a dip treatment solution is a composition containing, in addition to the above-described rubber latex (a) and compound (b), one or more selected from an aqueous compound (c) with a (thermally dissociative blocked) isocyanate group, a polyphenol (d), and a polyvalent metal salt (e).

Furthermore, as a dip treatment solution that does not contain resorcinol and formaldehyde, a composition containing polyphenols (I) and aldehydes (II) may also be used. Such a composition may further include at least one of an isocyanate compound (III) and a rubber latex (IV), in addition to the polyphenols (I) and the aldehydes (II).

When an adhesive composition to treat (coat) the hybrid cord (organic fiber cord) with adhesive contains the polyphenols (I) and the aldehydes (II), good adhesion can be achieved even when resorcinol is not used, considering environmental load.

### [Polyphenols (I)]

When the adhesive composition includes the polyphenols (I) as a resin component, the adhesion with the hybrid cord (organic fiber cord) can be enhanced. Here, the polyphenols (I) are typically water-soluble polyphenols and are not particularly limited as long as they are polyphenols other than resorcinol (resorcinol). In the polyphenols (I), the number of aromatic rings or hydroxyl groups can be appropriately selected.

From the perspective of achieving further excellent adhesion, the polyphenols (I) preferably have two or more hydroxyl groups, and more preferably have three or more hydroxyl groups. When the polyphenols have three or more hydroxyl groups, the polyphenols or the condensates thereof dissolve in the adhesive composition (dip treatment solution) containing water. Since this allows the polyphenols to be uniformly distributed in the adhesive composition, further excellent adhesion can be achieved. Furthermore, if the polyphenols (I) are polyphenols containing two or more aromatic rings, each aromatic ring may have two or three hydroxyl groups located at the ortho, meta, or para positions.

As the polyphenols (I), the polyphenol compounds disclosed in WO 2022/130879 A1 can be used, for example. These polyphenols (I) may be used alone or in combination of two or more.

### [Aldehydes (II)]

When the adhesive composition includes the aldehydes (II) as a resin component in addition to the above-described polyphenols (I), high adhesion can be achieved in conjunction with the above-described polyphenols (I). Here, the aldehydes (II) are not particularly limited and can be selected as appropriate depending on the required performances. It should be noted that in this specification, the aldehydes (II) encompass derivatives of aldehydes derived from aldehydes.

Examples of the aldehydes (II) include, for example, monoaldehydes such as formaldehyde, acetaldehyde, butyraldehyde, acrolein, propionaldehyde, chloral, butyraldehyde, caproaldehyde, and allyl aldehyde; aliphatic dialdehydes such as glyoxal, malonaldehyde, succinaldehyde, glutaraldehyde, and adipaldehyde; aldehydes containing an aromatic ring; and dialdehyde starch. These aldehydes (II) can be used alone or in combination of two or more.

The aldehydes (II) are preferably aldehydes having an aromatic ring or contain aldehydes having an aromatic ring because they provide further excellent adhesion. Moreover, the aldehydes (II) are preferably free of formaldehyde. Here, "free of formaldehyde" means, for example, that the formaldehyde content is less than 0.5 mass% of the total mass of the aldehydes.

In the adhesive composition, it is preferable that the polyphenols (I) and the aldehydes (II) are in a condensed state, and the mass ratio of aldehydes having an aromatic ring to polyphenols (the content of aldehydes having an aromatic ring/content of polyphenols) is 0.1 or more and 3 or less. This is because this ratio optimizes the hardness and adhesion of the resin formed as a condensation product of the polyphenols and the aldehydes having an aromatic ring. From a similar perspective, in the adhesive composition, the mass ratio of polyphenols to aldehydes having an aromatic ring (the content of aldehydes having an aromatic ring/content of polyphenols) is more preferably 0.25 or more, and more preferably 2.5 or lower.

The above-described mass ratio refers to the mass ratio based on the mass of the dried material (solid content ratio).

In addition, the total content of the polyphenols (I) and the aldehydes (II) in the adhesive composition is preferably 3 to 30 mass%. This is because further excellent adhesion is ensured without compromising workability, etc. From a similar perspective, the total content of the polyphenols (I) and the aldehydes (II) in the adhesive composition is more preferably 5 mass% or more and more preferably 25 mass% or less.

The above-described total content also refers to the total content based on the mass of the dried material (solid content ratio).

### [Isocyanate Compound (III)]

The adhesive composition preferably contains an isocyanate compound (III), in addition to the polyphenols (I) and the aldehydes (II) described above. In this case, the adhesion of the adhesive composition is further enhanced through the synergistic effect with the polyphenols (I) and the aldehydes (II).

Here, the isocyanate compound (III) is a compound that has an effect of promoting adhesion to the resin material, which is the adherend of the adhesive composition (e.g., phenol/aldehyde resin obtained through condensation of the polyphenols (I) and the aldehydes (II)), and is compound contains an isocyanate group as a polar functional group. The isocyanate compound (III) may be used alone or in combination of two or more.

The isocyanate compound (III) is not particularly limited, but from the perspective of further improving adhesion, it preferably includes a (blocked) isocyanate group-containing aromatic compound. The inclusion of a (blocked) isocyanate group-containing aromatic compound in the adhesive composition results in the distribution of the (blocked) isocyanate group-containing aromatic compound near the interface between the hybrid cord (organic fiber cord) and the adhesive composition, thereby providing an effect of further promoting the adhesion. This effect allows the adhesive composition to achieve an even higher level of adhesion with the hybrid cord (organic fiber cord).

Examples of (blocked) isocyanate group-containing aromatic compounds that may be used include those described in JP 2023-040157 A and those described in JP 2023-030762 A.

The content of the isocyanate compound (III) in the above-described adhesive composition is not particularly limited, but from the perspective of more reliably ensuring further excellent adhesion, the content is preferably 5 to 65 mass%. From a similar perspective, the content of the isocyanate compound (III) in the adhesive composition is more preferably 10 mass% or more and more preferably 45 mass% or less.

It should be noted that the above-mentioned content is the content based on the mass of the dried material (solid content ratio).

### [Rubber Latex (IV)]

The adhesive composition may substantially contain a rubber latex (IV), in addition to the polyphenol (I), the aldehydes (II), and the isocyanate compound (III) described above. This allows the adhesive composition to further enhance adhesion to rubber members.

Here, the rubber latex (IV) is not particularly limited and examples include, besides natural rubber (NR), synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinyl pyridine-styrene-butadiene copolymer rubber (Vp). These rubber latexes (IV) may be used alone or in combination of two or more types.

When preparing an adhesive composition containing the rubber latex (IV), it is preferable to mix the rubber latex (IV) with the phenols (I) and the aldehydes (II) before the isocyanate compound (III) is added.

The content of the rubber latex (IV) in the adhesive composition is preferably 20 mass% or more, more preferably 25 mass% or more, and is preferably 70 mass% or less, and more preferably 60 mass% or less.

The method for producing the adhesive composition is not particularly limited, but examples include, for example, a method of mixing and aging raw materials such as the polyphenol (I), the aldehydes (II), and the rubber latex (IV), or a method of mixing and aging the polyphenols (I) and the aldehydes (II) first, then adding the rubber latex (IV) followed by further aging. In cases where the raw materials of the adhesive composition include the isocyanate compound (III), the method may include adding the rubber latex (IV), aging the mixture, and then adding the isocyanate compound (III).

### <Rubber-Fiber Composite>

A rubber-fiber composite of the present embodiment includes the hybrid cord of the present embodiment described above. Since this a rubber-fiber composite of the present embodiment includes the hybrid cord of the present embodiment described above, the environmental load can be reduced. It should be noted that the fiber portion of the rubber-fiber composite corresponds to the hybrid cord described above.

In one example, the rubber-fiber composite includes the hybrid cord and a coating rubber that covers the hybrid cord. Here, the coating rubber that can be used may be a rubber composition that includes rubber components such as natural or synthetic rubber mixed with fillers such as carbon black, antioxidants, vulcanizing agents such as sulfur, and vulcanization accelerators.

### <Tire>

A tire of the present embodiment includes the hybrid cord of the present embodiment described above. Since the tire of the present embodiment includes the hybrid cord described above, the environmental load can be reduced while maintaining the tire characteristics.

In the tire of the present embodiment, the area to which the hybrid cord is applied is preferably the carcass and the belt reinforcing layer (also referred to as the "cap layer"), with the carcass being particularly preferred.

Next, one embodiment of the tire according to the present disclosure will be described in detail with reference to the drawing.

FIG. 1 is a cross-sectional view of one embodiment of the tire according to the present disclosure. The tire 100 illustrated in FIG. 1 includes a pair of bead portions 10, a pair of sidewall portions 20, a tread portion 30, a carcass 50 extending in a toroidal shape between bead cores 40 embedded in the bead portions 10, a belt 60 composed of two belt layers 60A, 60B disposed in the tread portion 30 (more specifically, disposed on the outside of the crown portion of the carcass 50 in the tire radial direction), a belt reinforcing layer 70A (also referred to as the "cap ply") disposed on the outside of the belt 60 in the tire radial direction to entirely cover the belt 60, and a pair of belt reinforcing layers (also referred to as "layer plies") 70B disposed to cover only the ends of the belt reinforcing layer 70A.

In the tire 100 illustrated in FIG. 1, the carcass 50 is composed of a single carcass ply and includes a main body portion extending in a toroidal shape between the pair of bead cores 40 embedded in the bead portions 10, and a turned-up portion wound around each bead core 40 from the inside toward the outside in the tire width direction and radially outward. However, the number and structure of the carcass plies of the carcass 50 in the tire of the present disclosure are not limited to this. Here, the carcass ply constituting the carcass 50 preferably is formed by coating a plurality of reinforcing cords extending in a direction substantially perpendicular to the tire circumferential direction (for example, extending at an angle of 70° to 90° with a coating rubber. In other words, the carcass 50 is preferably a radial carcass. As the reinforcing cords of the carcass 50, the hybrid cord described above is preferred, but if the above-described hybrid cord is applied to other tire components, other organic fiber cords or steel cords may also be used. Examples of other organic fiber cords include polyethylene terephthalate cords and rayon cords. As the coating rubber, a rubber composition including rubber components such as natural or synthetic rubber mixed with fillers such as carbon black, antioxidants, vulcanizing agents such as sulfur, and vulcanization accelerators can be used.

Additionally, the belt 60 of the tire 100 illustrated in FIG. 1 is composed of two belt layers 60A and 60B. Each belt layer 60A, 60B typically is formed by coating a reinforcing cord extending at an inclination (for example, an inclination at an angle of 15° to 40°) relative to the tire equatorial plane, with a coating rubber, preferably, is a steel cord coated with a coating rubber. Furthermore, the two belt layers 60A and 60B are laminated such that the reinforcing cords constituting the belt layers 60A and 60B intersect across the tire equatorial plane, forming the belt 60.

Although the belt 60 in the figure is composed of two belt layers 60A and 60B, the number of belt layers constituting the belt in the tire of the present disclosure may be three or more.

In the tire 100 illustrated in FIG. 1, the belt reinforcing layers 70A and 70B are formed by coating reinforcing cords disposed substantially parallel to the tire circumferential direction (for example, at an angle of 0° to 5° relative to the tire circumferential direction), with a coating rubber. The belt reinforcing layers 70A and 70B are formed by continuously spirally winding a narrow-width strip prepared by coating a reinforcing cord with a coating rubber in the tire circumferential direction. In this case, the absence of joint portions in the tire circumferential direction improves tire uniformity, and the absence of joint portions prevents the concentration of strain at the joints. The hybrid cord described above is preferred as the reinforcing cords for the belt reinforcing layers 70A and 70B, but if the above-described hybrid cord is applied to other tire components, other organic fiber cords may also be used. Examples of other organic fiber cords include polyethylene terephthalate cords and rayon cords. As the coating rubber, a rubber composition including rubber components such as natural or synthetic rubber mixed with fillers such as carbon black, antioxidants, vulcanizing agents such as sulfur, and vulcanization accelerators can be used.

It should be noted that although the tire 100 illustrated in FIG. 1 includes the belt reinforcing layers 70A and 70B, a tire in which either the belt reinforcing layer 70A or the belt reinforcing layer 70B is omitted is also one embodiment of the tire according to the present disclosure.
Additionally, in the tire 100 illustrated in FIG. 1, the belt reinforcing layers 70A and 70B are each composed of a single layer, but they may be each composed of two or more layers.

### <Conveyor Belt>

A conveyor belt of the present embodiment includes the hybrid cord of the present embodiment described above. Since this conveyor belt of the present embodiment includes the hybrid cord of the present embodiment described above, the environmental load can be reduced.

In one embodiment, the hybrid cord can be used as a reinforcing material for the conveyor belt.

### <Hose>

A hose of the present embodiment includes the hybrid cord of the present embodiment described above. Since this hose of the present embodiment includes the hybrid cord of the present embodiment described above, the environmental load can be reduced.

In one embodiment, the hose includes an inner rubber layer (inner tube rubber) disposed on the inner side of the radial direction, an outer rubber layer disposed on the outer side in the radial direction, and a reinforcing layer disposed between the inner rubber layer and the outer rubber layer, wherein the hybrid cord is used in the reinforcing layer.

### EXAMPLES

The present disclosure will be described in more detail with reference to the following examples, but the present disclosure is not limited to the examples below.

### <Measurement of Break Elongation>

The break elongation of the aramid fibers used below was measured by conducting a tensile test at room temperature (23°C) in accordance with JIS L 1013 "Test Methods for Chemical Fiber Filament Yarns."

### <Production of Cords>

### (Comparative Example 1)

Two aramid fibers of 1100 dtex (manufactured by Toray DuPont, with an amide density of 12.5) and one polyamide 6,6 (PA66) fiber of 940 dtex (with an amide density of 14.3) were twisted together to produce a hybrid cord [cord structure: (1100×2, 940)/3]. Here, the aramid fibers have a break elongation of 5% and a breaking strength of 15.0 cN/dtex. Additionally, the number of primary twists for the aramid fiber was 52 twists/10 cm, the number of primary twists for the PA66 fiber was 46 twists/10 cm, and the number of secondary twists for these fibers was 52 twists/10 cm.

### (Example 1)

Two aramid fibers of 1100 dtex (manufactured by Toray DuPont, with an amide density of 12.5) and one polyamide 4,10 (PA410) fiber of 940 dtex (with an amide density of 12.5) were twisted together to produce a hybrid cord [cord structure: (1100×2, 940)/3]. Here, the aramid fibers have a break elongation of 5% and a breaking strength of 15.0 cN/dtex. Additionally, the number of primary twists for the aramid fiber was 52 twists/10 cm, the number of primary twists for the PA410 fiber was 46 twists/10 cm, and the number of secondary twists for these fibers was 52 twists/10 cm.

### (Comparative Example 2)

Two polyamide 6,6 (PA66) fibers of 1400 dtex (with an amide density of 14.3) were primary twisted and then aligned and secondary twisted to produce a twisted cord [cord structure: 1400//2/2]. Here, the number of primary twists was 22 twists/10 cm, and the number of secondary twists was 22 twists/10 cm.

### (Comparative Example 3)

Two polyamide 4,10 (PA410) fibers of 1400 dtex (with an amide density of 12.5) were primary twisted and then aligned and secondary twisted to produce a twisted cord [cord structure: 1400//2/2]. Here, the number of primary twists was 22 twists/10 cm, and the number of secondary twists was 22 twists/10 cm.

### <Evaluation of Physical Properties of Cord>

The cords obtained as described above were subjected to a tensile test in accordance with JIS L 1013 "Testing Methods for Chemical Fiber Filament Yarns," and the load (N)-elongation (%) curves of the cords were measured. In Table 1, the tenacity (N) and elongation (%) at break at 100°C are expressed as indices with the corresponding results of Comparative Example 1 being 100. Additionally, in Table 2, the tenacity (N) and elongation (%) at break at 100°C are expressed as indices with the corresponding results of Comparative Example 2 being 100.

**[Table 1]**

| | | | Comparative Example 1 | Example 1 |
|---|---|---|---|---|
| Cord structure | | - | (Aramid, PA66): (1100×2, 940)/3 | (Aramid, PA410): (1100×2, 940)/3 |
| Number of twists | Number of primary twists | /10cm | Aramid: 52 | Aramid: 52 |
| | | | PA66: 46 | PA410: 46 |
| | Number of secondary twists | /10cm | 52 | 52 |
| Evaluation results | Tenacity at break at 100°C | Index | 100 | 97 |
| | Elongation at break at 100°C | Index | 100 | 101 |

**[Table 2]**

| | | | Comparative Example 2 | Comparative Example 3 |
|---|---|---|---|---|
| Cord structure | | - | PA66: 1400//2/2 | PA410: 1400//2/2 |
| Number of twists | Number of primary twists | /10cm | 22 | 22 |
| | Number of secondary twists | /10cm | 22 | 22 |
| Evaluation results | Tenacity at break at 100°C | Index | 100 | 86 |
| | Elongation at break at 100°C | Index | 100 | 107 |

From the comparison between Comparative Examples 2 and Comparative Examples 3, it can be understood that the cord composed only of PA410 fibers exhibited a greater reduction in tenacity at break at high temperatures compared to the cord composed only of PA66 fibers.

On the other hand, from the comparison between Comparative Example 1 and Example 1, it can be understood that the hybrid cord of PA410 fiber and aramid fibers (with a break elongation of 7% or less) had a tenacity at break at high temperatures equivalent to that of the hybrid cord of PA66 fibers and aramid fibers.

### INDUSTRIAL APPLICABILITY

The hybrid cord and the rubber-fiber composite of the present disclosure can be applied not only to tires but also to conveyor belts, hoses, and other products.

### REFERENCE SIGNS LIST

100: Tire, 10: Bead portion, 20: Sidewall portion, 30: Tread portion, 40: Bead core, 50: Carcass, 60: Belt, 60A, 60B: Belt layers, 70A: Belt reinforcing layer (cap ply), 70B: Belt reinforcing layer (layer ply)

## Claims

1. A hybrid cord comprising a polyamide 4,10 fiber and a fiber A with a break elongation of 7% or less.

2. The hybrid cord according to claim 1, wherein the fiber A is at least one type selected from the group consisting of an aramid fiber, a carbon fiber, and a glass fiber.

3. The hybrid cord according to claim 1, which is a cord formed from three fibers twisted together.

4. The hybrid cord according to claim 1, which is a cord formed from two aramid fibers and one polyamide 4,10 fiber twisted together.

5. A rubber-fiber composite comprising the hybrid cord according to claim 1.

6. A tire comprising the hybrid cord according to claim 1.
